Europäisches Patentamt

European Patent Office

Office européen des brevets

(19)

(11) Veröffentlichungsnummer : **0 088 329**
**B1**

(12) **EUROPÄISCHE PATENTSCHRIFT**

(45) Veröffentlichungstag der Patentschrift :
02.12.87

(21) Anmeldenummer : 83101946.8

(22) Anmeldetag : 28.02.83

(51) Int. Cl.⁴ : **B 60 K 20/12**

(54) **Verbindungselement für Schaltgestänge.**

(30) Priorität : **10.03.82 DE 3208543**
**19.03.82 DE 3210107**

(43) Veröffentlichungstag der Anmeldung :
**14.09.83 Patentblatt 83/37**

(45) Bekanntmachung des Hinweises auf die Patenterteilung : **02.12.87 Patentblatt 87/49**

(84) Benannte Vertragsstaaten :
**DE FR GB IT SE**

(56) Entgegenhaltungen :
**DE-A- 2 206 715**
**DE-A- 2 457 017**
**DE-A- 2 604 893**
**DE-C- 3 109 182**
**Patent Abstracts of Japan, Band 2, Nr.39, 15. März**
**1978, Seite 8145M77**

(73) Patentinhaber : **Adam Opel Aktiengesellschaft**
**Bahnhofsplatz 1 Postfach 1560**
**D-6090 Rüsselsheim (DE)**

(72) Erfinder : **Renk, Rolf, Ing. (grad.)**
**Karl-Ulrich-Strasse 13**
**D-6095 Ginsheim-Gustavsburg 2 (DE)**
Erfinder : **Muth, Peter**
**Berliner Strasse 2**
**D-6501 Nieder-Olm (DE)**
Erfinder : **Hartung, Wolfgang, Ing. (grad.)**
**Armenruhstrasse 8**
**D-6202 Wiesbaden (DE)**
Erfinder : **Krake, Friedhelm, Ing. (grad.)**
**Im Hasengrund 60**
**D-6090 Rüsselsheim (DE)**
Erfinder : **Furche, Marion, Dipl.-Ing.**
**Klemensstrasse 2**
**D-6500 Mainz 1 (DE)**

(74) Vertreter : **Baumgarten, Jochem, Dipl.-Ing. et al**
**C/O Adam Opel Aktiengesellschaft Bahnhofsplatz 1**
**Postfach 1560**
**D-6090 Rüsselsheim (DE)**

Jouve, 18, rue St-Denis, 75001 Paris, France

EP 0 088 329 B1

## Beschreibung

Die Erfindung betrifft ein Verbindungselement für das zwischen Getriebe und Schalthebel eines Kraftfahrzeuges angeordnete Schaltgestänge, das als Entkopplungseinrichtung ausgebildet und zwischen zwei Schaltstangen angeordnet ist und nach dem Einschalten eines Ganges eine Hin- und Herbewegung der entkoppelten Schaltstange zuläßt. Solche Verbindungselemente sind allgemein bekannt.

Wird aus Platzersparnisgründen der Motor- und Getriebeblock eines Kraftfahrzeuges quer zur Längsachse des Fahrzeuges angeordnet, so besteht die Gefahr des Gangspringens. Durch Fahrbahnanregung und aufgebrachtes Motordrehmoment werden Drehbewegungen des querliegenden Motor- und Getriebeblocks um seine Längsachse erzeugt und das Schaltgestänge dadurch derart in Schwingungen versetzt, daß Antriebsblock und Schaltgestänge gegeneinander schwingen. Dies kann bei entsprechend großen Schwingungsamplituden zum selbsttätigen Ausschalten des gerade eingelegten Ganges führen.

Aufgabe der Erfindung ist es, eine im Aufbau einfache und wenig Platz beanspruchende Entkopplungseinrichtung zu schaffen, die sich ohne Schwierigkeiten auch in das die Schaltstangen umgebende Schutzrohr einbauen läßt. Dies wird gemäß der Erfindung auf vorteilhafte Weise dadurch erreicht, daß die Wirkverbindung der in Eingriff miteinander stehenden Enden der Schaltstangen in Abhängigkeit von den Schaltbewegungen des Schalthebels über eine unter Federwirkung stehende und an der Schaltstange schwenkbar gelagerte Klinke erfolgt, die mit karosseriefesten Teilen zusammenwirkende Steuermittel aufweist und mit Teilen der anderen Schaltstange in und außer Eingriff gelangt.

Die Entkopplungseinrichtung an den erfindungsgemäßen Schaltstangen ist einfach im Aufbau und läßt sich ohne viel Arbeitsaufwand in das vorhandene Schutzrohr einbauen, das an der Einbaustelle mit einer Öffnung und einem Deckel versehen wird. Durch die einfache Montage der Entkopplungseinrichtung und ihren zeitsparenden Einbau in das Schutzrohr ist eine kostengünstige Massenfertigung möglich.

In vorteilhafter Weiterbildung der Erfindung empfiehlt es sich, die Klinke am Ende der einen Schaltstange zu lagern, einen am Ende der anderen Schaltstange gelagerten Mitnahmestift zum Zusammenwirken mit der Klinke vorzusehen und an der Klinke einen Nocken anzubringen, der in Vertiefungen des die Schaltstangen umgebenden Schutzrohres oder eines anderen karosseriefesten Teiles einrasten kann. Die Verbindung der beiden Schaltstangen erfolgt somit formschlüssig, was aber auch kraftschlüssig bewerkstelligt werden kann. Die Schaltstangen können als Rohre ausgebildet und mit ihren Enden verschiebbar ineinander gesteckt sein, und der Stift zur Lagerung der Klinke kann an dem einen Rohr befestigt sein und mit seinen Enden in gegenüberliegende Längsschlitze des anderen Rohres eingreifen, damit bei der Gangwahl beide Rohre gemeinsam eine Drehbewegung ausführen können. Der Mitnahmestift kann in einem quer zu Längsachse des Rohres verlaufenden Schlitz verschiebbar gelagert sein und durch eine Feder in seiner Ausgangsstellung gehalten werden. Durch diese Anordnung des Mitnahmestiftes wird eine Verklemmung der Klinke verhindert, wenn er beim Gangschalten der in der Klinke zur Aufnahme des Mitnahmestiftes vorgesehenen Aussparung nicht genau gegenüberliegt. In diesem Fall wird der Mitnahmestift von der Klinke weggedrückt und rastet erst dann in die Aussparung ein, wenn der Stift diese erreicht hat.

Damit die beiden Rohre des Schaltgestänges gleichen Durchmesser haben können, ist es zweckmäßig, die Klinke in einem die beiden Enden der Rohre des Schaltgestänges verbindenden Rohrstück drehbar zu lagern und Öffnungen in einem Rohr und im Rohrstück für die Klinke zum Hineinragen in das Schutzrohr vorzusehen.

Um eine Einjustierung der Vertiefungen bzw. Rastlöcher für den Nocken bzw. die Rolle des Klinke zu ermöglichen, kann der Deckel des Schutzrohres Langlöcher für die Befestigungsschrauben besitzen.

An die Stelle des Mitnahmestiftes kann auch eine zweite Klinke treten, so daß am Ende jedes Rohres des Schaltgestänges je eine unter Federwirkung stehende Klinke angeordnet ist, beide Klinken sich in dem die Enden der Rohre aufnehmenden Rohrstück befinden und miteinander zusammenwirken. Die erste Klinke kann eine Verzahnung aufweisen, in die ein Zahn oder eine Verzahnung der zweiten Klinke einrasten kann.

Die Kopplung der beiden Schaltstangen kann auch kraftschlüssig erfolgen, was dadurch erreicht wird, daß die unter Federwirkung stehende Klinke im Rohrstück und in einem Rohr des Schaltgestänges gelagert ist, durch Öffnungen im Rohr und im Rohrstück in das Schutzrohr hineinragt und im Bereich der Schwenkachse Nocken zum Festklemmen im Rohr des Schaltgestänges besitzt, um die kraftschlüssige Verbindung zwischen den beiden Rohren des Schaltgestänges herzustellen.

Schließlich kann der Mitnahmestift an der Klinke befestigt sein und in eine konisch sich erweiternde Aussparung einer am Ende des einen Rohres des Schaltgestänges befindlichen Fangeinrichtung eingreifen.

Weitere Merkmale und Vorteile der Erfindung können aus der Zeichnung und der zugehörigen Beschreibung entnommen werden. In der Zeichnung sind Ausführungsbeispiele der Erfindung dargestellt, und zwar zeigt :

Fig. 1 ein Schaltgestänge mit Schutzrohr zum Einbau der erfindungsgemäßen Entkopplungseinrichtung,

Fig. 2 einen Längsschnitt durch die Entkopplungseinrichtung mit gekoppelten Schaltstangen,

2

Fig. 3 einen Querschnitt entlang der Linie III-III in Fig. 2,

Fig. 4 die Entkopplungseinrichtung nach Fig. 2 im entkoppelten Zustand,

Fig. 5 einen Längsschnitt durch eine weitere Ausführungsform der Entkopplungseinrichtung in Leerlaufstellung, bei der die Klinke in einem Rohrstück zwischen den Schaltstangen angeordnet ist,

Fig. 6 die Entkopplungseinrichtung nach Fig. 5 bei eingeschaltetem 1. oder 3. Gang,

Fig. 7 einen Schnitt entlang der Linie VII-VII in Fig. 6,

Fig. 8 einen Längsschnitt durch eine dritte Ausführungsform der Entkopplungseinrichtung mit zwei zusammenwirkenden Klinken,

Fig. 9 die beiden Klinken nach Fig. 8 mit ineinandergreifenden Verzahnungen,

Fig. 10 einen Längsschnitt durch eine weitere Ausführungsform der Entkopplungseinrichtung mit einer Klinke, die eine kraftschlüssige Verbindung herstellt,

Fig. 11 eine Klinke mit federnd gelagerter Rolle,

Fig. 12 eine Klinke mit konisch sich erweiternder Aussparung für den Mitnahmestift,

Fig. 13 einen Längsschnitt durch eine weitere Ausführungsform der Entkopplungseinrichtung mit einem an der Klinke angebrachten Mitnahmestift und

Fig. 14 einen Schnitt entlang der Linie XIV-XIV in Fig. 13.

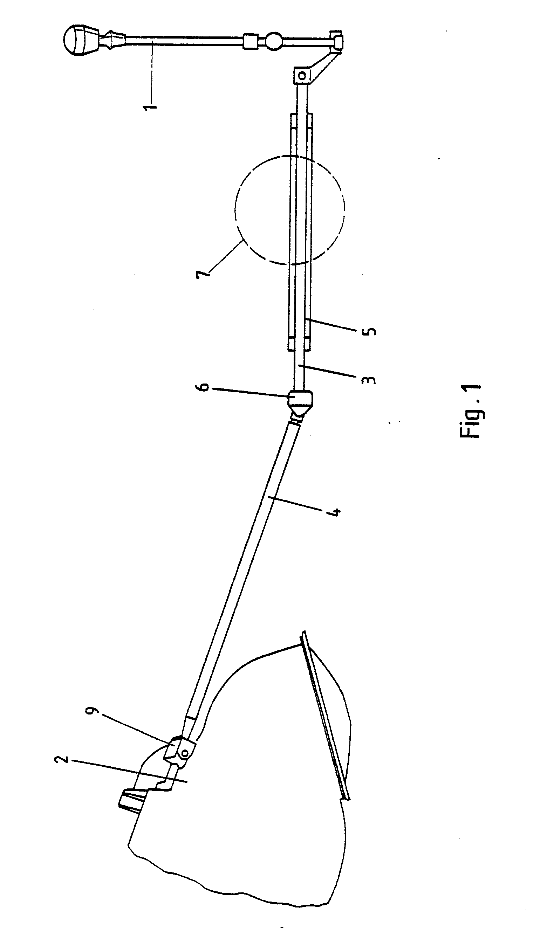

In Fig. 1 ist ein Schalthebel 1 und ein Getriebeblock 2 eines Kraftfahrzeuges mit den zugehörigen Schaltstangen 3 und 4 abgebildet. Die mit dem Schalthebel 1 verbundene Schaltstange 3 ist von einem Schutzrohr 5 umgeben und besitzt an ihrem vorderen Ende ein Kreuzgelenk 6 für die Verbindung mit der mit dem Getriebeblock 2 über ein weiteres Kreuzgelenk 9 verbundenen Schaltstange 4. In den Kreuzgelenken 6 und 9 sind elastische Einlagen vorgesehen. Die Entkopplungseinrichtung ist im Bereich des gestrichelt eingezeichneten Kreises 7 im Schutzrohr 5 angeordnet.

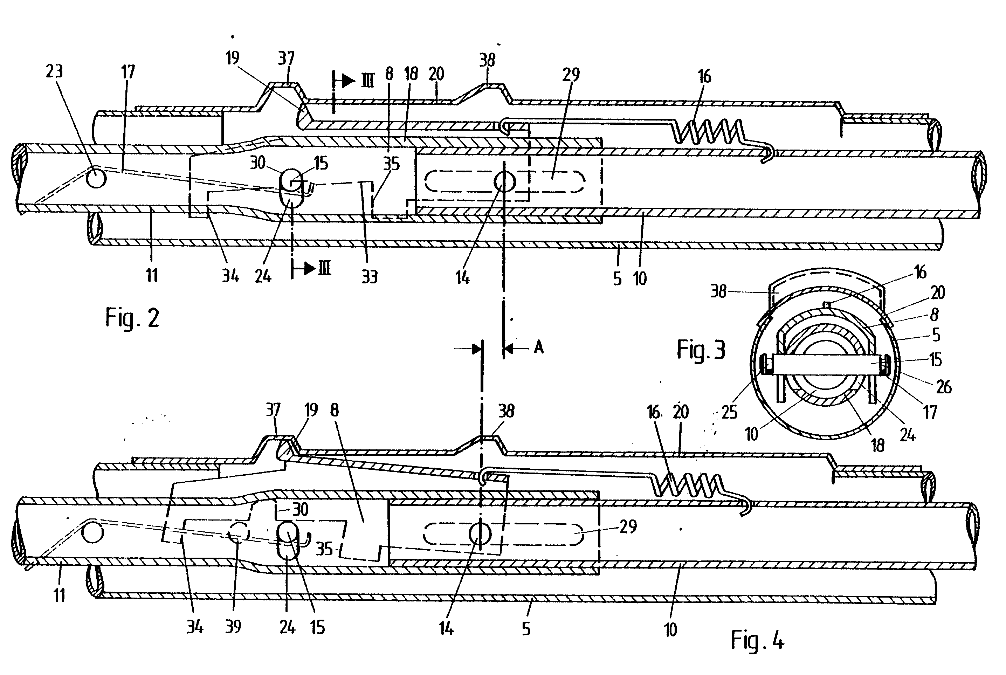

Die in Fig. 2 bis 4 dargestellte Entkopplungseinrichtung besteht aus der schwenkbaren Klinke 8, die im eingerasteten Zustand nach Fig. 2 die Wirkverbindung zwischen den Enden der als Rohre 10 und 11 ausgebildeten Schaltstangen herstellt, den beiden Stiften 14 und 15 sowie der Zugfeder 16 und der Schenkelfeder 17. Die Rohre 10 und 11 sind mit ihren Enden längsverschiebbar ineinandergesteckt. Zu diesem Zweck kann das mit dem Getriebe 2 in Verbindung stehende Rohr 11 entweder einen größeren Durchmesser als das mit dem Schalthebel 1 verbundene Rohr 10 haben oder eine Ausbauchung 18 aufweisen, die das Ende des Rohres 10 aufnimmt. Die am Rohr 10 befestigte Zugfeder 16 greift an der Klinke 8 an und drückt deren Nocken 19 gegen den Deckel 20 des Schutzrohres 5. Die Schenkelfeder 17 stützt sich mit ihrem einen Ende am Rohr 11 und an einem im Rohr 11 befestigten und mit Rillen für die Schenkel der Feder 17 versehenen Stift 23 ab und greift mit ihren beiden freien Schenkeln unter den in einem Querschlitz 24 im Rohr 11 verschiebbar angeordneten Mitnahmestift 15, der zur Zentrierung an seinen Enden Rillen 25 und 26 für die Schenkel der Schenkelfeder 17 aufweist. Der am Rohr 10 befestigte Stift 14 dient als Schwenkachse für die Klinke 8 und ragt mit seinen Enden in gegenüberliegende Längsschlitze 29 des Rohres 11 hinein. Die Schlitze 29 lassen im entkoppelten Zustand eine Längsverschiebung der beiden Rohre 10 und 11 zu, während bei einer Drehbewegung das Rohr 11 von dem Rohr 10 mitgedreht wird. Der Stift 14 überträgt also die Wählbewegung beim Gangschalten vom Rohr 10 auf das Rohr 11. In der Klinke 8 ist eine Aussparung 30 für den Mitnahmestift 15 vorgesehen. Ferner hat die Klinke 8 eine Lauffläche 33 für den Mitnahmestift 15, die an ihren Enden Anschlagflächen 34 und 35 besitzt, um ein Herausrutschen des Rohres 11 aus dem Schutzrohr 5 zu verhindern. Im Deckel 20 des Schutzrohres 5 befinden sich Vertiefungen 37 und 38 zum Einrasten des Nockens 19 der Klinke 8. Damit diese Vertiefungen in die richtige Stellung zum Nocken 19 einjustiert werden können, ist der Deckel 20 verschieb- und feststellbar auf dem Schutzrohr 5 angebracht, indem der Deckel beispielsweise mit Längsschlitzen für die Befestigungsschrauben versehen wird. Durch entsprechende Gestaltung des Deckels 20 ist es auch möglich, jede Vertiefung für sich allein einzujustieren.

Beim Einschalten des 2. oder 4. Ganges läuft der Nocken 19 der Klinke 8 auf dem Deckel 20 entlang, wobei die Aussparung 30 der Klinke den Mitnahmestift 15, der durch die Schenkelfeder 17 an das obere Ende des Querschlitzes 24 gedrückt wird, nach links schiebt. Beide Rohre 10 und 11 sind über die Klinke 8 und den Mitnahmestift 15 miteinander formschlüssig verbunden. Kurz bevor der Nocken 19 die Vertiefung 37 erreicht hat, ist der 2. oder 4. Gang eingeschaltet und die Entkopplungseinrichtung nimmt die Stellung nach Fig. 2 ein. Treten jetzt Schwingungen oder Stöße im Gestänge 10. 11 auf, dann gleitet der Nocken 19 in die Vertiefung des Deckels 20, wie dies Fig. 4 erkennen läßt, und das Rohr 10 verschiebt sich um die Strecke A. Die Klinke 8 klappt jetzt unter der Einwirkung der Zugfeder 16 nach oben und gibt den Mitnahmestift 15 frei, so daß die Rohre 10 und 11 entkoppelt sind und das Rohr 11 Hin- und Herbewegungen ausführen kann, ohne das Rohr 10 zu beeinflussen. Dabei gleitet der Stift 14 in dem Schlitz 29 und der Mitnahmestift 15 auf der Fläche 33 der Klinke 8 entlang. Die Länge des Schlitzes 29 und die Anschlagflächen 34 und 35 begrenzen die Weglänge der Hin- und Herbewegungen, so daß ein Herausrutschen des Rohres 10 aus dem Rohr 11 verhindert wird. Beim Herausnehmen des 2. oder 4. Ganges wird das Rohr 10 nach rechts gezogen und mit ihm der Stift 14 an der Klinke 8, so daß der Nocken 19 aus der Vertiefung 37 heraustritt und die Klinke 8 nach unten klappt. Der Mitnahmestift 15 wird dabei von der Klinke 8 gegen die Wirkung der Schenkelfeder 17 nach unten gedrückt, wenn er nicht genau unter der Ausnehmung 30 steht und in diese eintreten kann. Durch das federnde Ausweichen des Mitnahmestiftes 15 wird ein Verklemmen der Klinke 8 vermieden. Sobald die Aussparung 30 bei den Hin- und Herbewegungen des Rohres 11 in den Bereich des Mitnahmestiftes 15 kommt, kann dieser einrasten und beide Rohre 10 und 11 sind wieder miteinander gekoppelt, wie dies in Fig. 2 der Fall ist. Derselbe Vorgang spielt sich beim Schalten des 1., 3. oder 5. Ganges oder des Rückwärtsganges ab, nur gleitet hierbei der Nocken 19 in die aus geometrischen Gründen etwas flachere Vertiefung 38. Die radialen Abmessungen der Vertiefungen können so bemessen sein, daß bestimmte Gänge, z. B. der Rückwärtsgang, bei denen praktisch kein Gangspringen auftritt, nicht entkoppelt werden.

Die Anordnung kann auch so getroffen sein, daß am Ende der Schaltbewegung der Nocken 19 in die Vertiefung 37 eingreift. Dann erfolgt die Entkopplung sofort am Ende der Schaltbewegung und nicht erst dann, wenn entsprechende Schwingungen im Gestänge auftreten.

Im entkoppelten Zustand muß ein Freiweg von im Extremfall ± 12 mm für das Rohr 11 vorhanden sein, um den Schalthebel 1 ruhig zu halten. Wie Versuche gezeigt haben, wird jedoch schon bei kleineren Freiwegen ein Gangspringen verhindert. Zur Verringerung der Flächenpressung beim Schalten kann der Mitnahmestift 15 statt kreisförmigen auch quadratischen Querschnitt aufweisen.

Je nach Größe der Bewegung der Rohre 10 und 11 beim Schalten, der Größe der Schwingungen oder Schüttelbewegungen und der Größe der Zusatzbewegung A (siehe Fig. 2 und 4) des Schalthebels 1 kann die Aussparung 30 breiter als der Mitnahmestift 15 ausgebildet sein. Die Anschlagflächen 34 und 35 oder der Längsschlitz 29 dienen mit entsprechendem Abstand bzw. entsprechender Länge auch dazu, das Rohr 11 des Schaltgestänges bzw. den Mitnahmestift 15 mitzunehmen, d. h. die Schaltbewegung auszuführen, wenn der Mitnahmestift 15 sich im entkoppelten Zustand nach Fig. 4 links von der Aussparung 30 befinden würde. Durch die elastische Einlage im Kreuzgelenk 9 wird jedoch im entkoppelten Zustand der Mitnahmestift 15 in Fig. 4 rechts von der Aussparung 30 liegen.

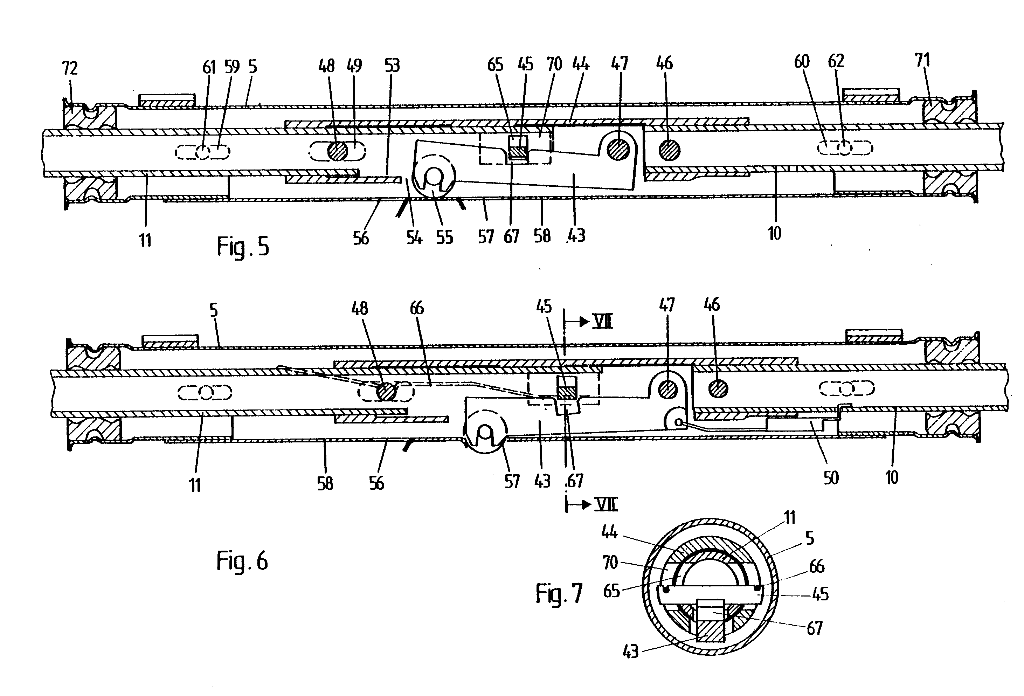

Die Entkopplungseinrichtung nach Fig. 5 bis 7 unterscheidet sich im wesentlichen von der Ausführungsform nach Fig. 2 bis 4 durch die Unterbringung der Klinke 43 in einem Rohrstück 44 und die Anordnung des Mitnahmestiftes 45 an der Oberseite der Klinke 43. Durch die Verwendung des Rohrstückes 44 zwischen den Rohren 10 und 11 des Schaltgestänges können diese Rohre gleichen Durchmesser besitzen und die Ausbauchung 18 (Fig. 2) am Rohr 11 entfällt. Das Rohr 10 ist über einen Stift 46 fest mit dem Rohrstück 44 verbunden, in dem die Klinke 43 mittels eines Stiftes 47 gelagert ist. Das Rohr 11 ist mit seinem Ende im Rohrstück 44 verschiebbar gelagert, wobei ein am Rohr 11 befestigter Stift 48 in Längsschlitze 49 des Rohrstückes 44 eingreift, damit beim Anwählen eines Ganges die Drehbewegung des Rohrstückes 44 auf das Rohr 11 übertragen wird. Für die Klinke 43 ist im Rohr 11 eine Öffnung 53 und im Rohrstück 44 eine Öffnung 54 vorgesehen, so daß die Klinke 43 in das Schutzrohr 5 hineinragt. Am freien Ende der Klinke 43 befindet sich eine Rolle 55, die unter Wirkung der am Rohr 10 und an der Klinke 43 angebrachten Zugfeder 50 in Löcher 56 und 57 im Deckel 58 des Schutzrohres 5 einrasten kann. Der Deckel 56 weist Langlöcher 59 und 60 für die in Gewindebohrungen des Schutzrohres 5 einschraubbaren Befestigungsschrauben 61 und 62 auf, damit ein Einjustieren der Löcher 56 und 57 in Abhängigkeit von der Stellung der Rolle 55 der Klinke 43 möglich ist. Der Mitnahmestift 45 besitzt rechteckigen Querschnitt zur Herabsetzung der Flächenpressung und ist in einem Querschlitz 65 des Rohres 11 verschiebbar gelagert. Eine am Rohr 11 sich abstützende und um den Stift 48 gelegte Schenkelfeder 66 drückt den Mitnahmestift 45 gegen das untere Ende des Querschlitzes 65, so daß er sich in der Aussparung 67 der Klinke 43 befindet, wenn die Rolle 55 auf dem Deckel 5 aufruht (Fig. 5). In das Rohrstück 44 sind Fenster 70 eingearbeitet, in die der Mitnahmestift 45 mit seinen Enden hineinragt. Diese Fenster begrenzen auch den Weg der Hin- und Herbewegung des Stiftes 45. Zur Lagerung der Rohre 10 und 11 sind an den beiden Enden des Schutzrohres 5 Lagerringe 71 und 72 eingesetzt.

Die Wirkungsweise der Anordnung nach Fig. 5 bis 7 ist die gleiche wie bei der Anordnung nach Fig. 2 bis 4. In Fig. 5 sind die Rohre 10 und 11 über die Klinke 43 und den Mitnahmestift 45 miteinander gekoppelt. Wenn dagegen die Rolle 55 der Klinke 43 in das Loch 57 des Deckels eingerastet ist, wie dies Fig. 6 zeigt, dann kann der freiliegende Mitnahmestift 45 eine Hin- und Herbewegung an der Oberseite der Klinke 43 ausführen (entkoppelter Zustand). Der maximale Weg der Hin- und Herbewegung des Mitnahmestiftes 45 und damit des Rohres 11 hängt von der Länge des Schlitzes 49 im Rohrstück 44 ab. Die Länge des Schlitzes 49 ist so gewählt, daß sich das Rohr 11 genügend weit in Längsrichtung verschieben kann.

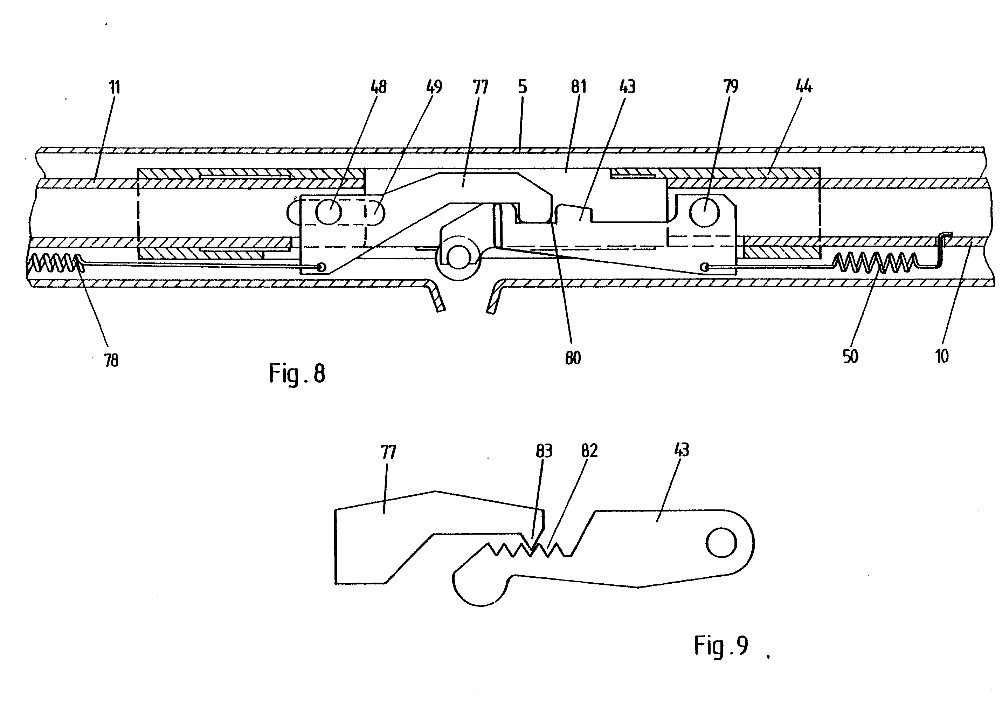

Statt des Mitnahmestiftes 45 nach Fig. 5 kann eine zweite Klinke 77 vorgesehen sein, die unter Wirkung der am Rohr 11 befestigten Zugfeder 78 steht und in eine Aussparung 80 der Klinke 43 eingreift, wie dies aus Fig. 8 hervorgeht. Das Rohrstück 44 hat eine obere Öffnung 81, durch die die Klinke 77 hindurchragt. Der am Rohr 11 befestigte Stift 48 ragt in die im Rohrstück 44 befindlichen Längsschlitze 49 hinein und dient auch gleichzeitig zur Lagerung der Klinke 77. Die Stifte 46 und 47 sind zu einem Stift 79 vereinigt, der sowohl die Verbindung zwischen den Rohren 10 und 44 herstellt, als auch zur Lagerung der unter der Wirkung der Feder 50 stehenden Klinke 43 bestimmt ist.

Wie Fig. 9 erkennen läßt, können die beiden Klinken 43 und 77 mit Verzahnungen 82 und 83 versehen sein, wobei beispielsweise in die an der Klinke 43 angebrachte Verzahnung 82 ein Zahn 83 der Klinke 77 eingreift. Durch diese Verzahnung kann eine Kopplung zwischen den Rohren 10 und 11 des Schaltgestänges in verschiedenen Abständen der beiden Rohre stattfinden. Selbstverständlich können beide Klinken 43 und 77 mit einer Mehrzahl von Zähnen versehen sein und diese z. B. auch teilweise gerade Zahnflanken aufweisen, so daß bei axialer Kraftübertragung keine bei schrägen Zahnflanken sich ergebende senkrechte Kraftkomponente entsteht.

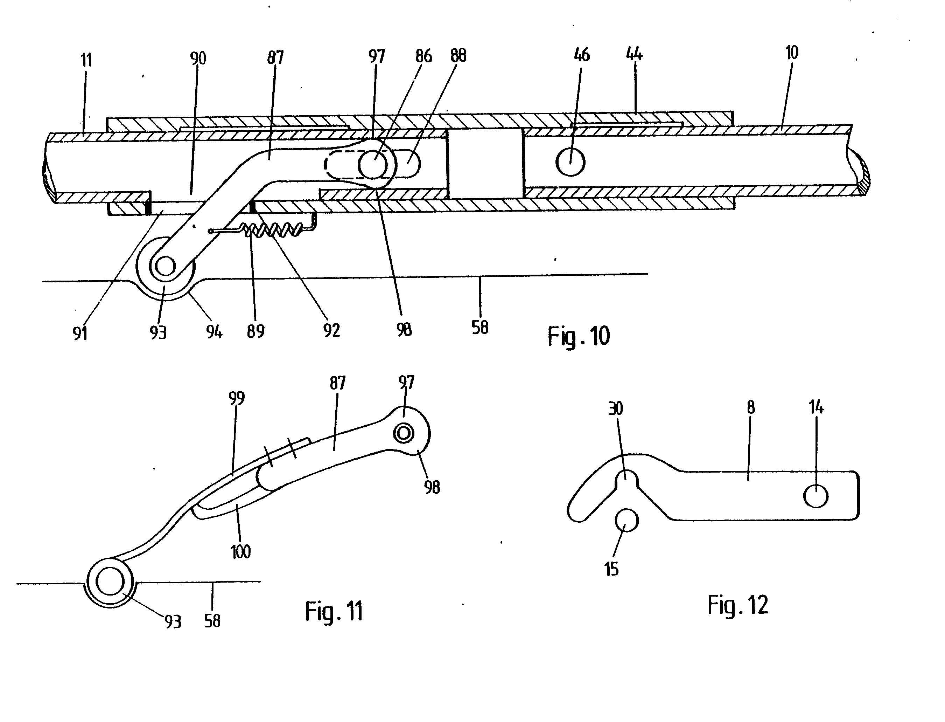

Eine Entkopplungseinrichtung, bei der eine kraftschlüssige Verbindung zwischen den Rohren 10 und 11 des Schaltgestänges bewirkt wird, ist in Fig. 10 und 11 dargestellt. Hier sind Rohr 10 und Rohrstück 44 durch den Stift 46 fest miteinander verbunden. Im Rohrstück 44 ist ein Stift 86 befestigt, auf dem die Klinke 87 im Innern des Rohres 11 gelagert ist und dessen Enden in Längsschlitze 88 des Rohres 11 eingreifen, damit beim Anwählen eines Ganges die Rohre 10 und 11 gemeinsam eine Drehbewegung ausführen können. Die Klinke 87 steht unter der Wirkung einer am Rohrstück 44 angebrachten Zugfeder 89 und ragt durch Öffnungen 90 und 91 im Rohr 11 und im Rohrstück 44 in das Schutzrohr 5 hinein. In der Öffnung 91 ist ein Anschlag 92 für die Klinke 87 ausgebildet. Am freien Ende der Klinke 87 befindet sich eine Rolle 93, die in Vertiefungen oder Löcher 94 des Deckels 58 einrasten kann, während am anderen Ende der Klinke 87 Nocken 97 und 98 vorgesehen sind, die sich im Innern des Rohres 11 verklemmen, wenn die Rolle 93 auf dem Deckel 58 aufliegt, so daß das Rohrstück 44 und das Rohr 11 fest miteinander gekoppelt sind. Gelangt die Rolle 93 in die Vertiefung 94, dann geben die Nocken 97 und 98 das Rohr 11 frei, und es kann eine Hin- und Herbewegung in axialer Richtung ausführen, deren Ausmaß durch die Länge des Schlitzes 88 bestimmt wird.

Zum Ausgleich von Toleranzen und um die Reibung zwischen den Nocken 97 und 98 und der Innenfläche des Rohres 11 zu begrenzen, ist es zweckmäßig, die Rolle 93 am freien Ende einer an der Klinke 87 befestigten Blattfeder 99 anzubringen, die unter Vorspannung auf dem hochgezogenen Ende einer Verlängerung 100 der Klinke 87 aufliegt. Beim Heraustreten der Rolle 93 aus der Vertiefung 94 hebt sich die Blattfeder 99 von der Verlängerung 100 etwas ab, so daß ein Blockieren der Nocken 97 und 98 verhindert wird.

Fig. 12 zeigt eine Anordnung ähnlich der in Fig. 2 bis 4, bei der jedoch die Aussparung 30 der Klinke 8 sich konisch nach unten erweitert, um den hier fest am Rohr 11 des Schaltgestänges angeordneten Mitnahmestift 15 in jedem Fall zu ergreifen. Der Mitnahmestift 15 braucht also nicht nachgiebig gelagert zu sein.

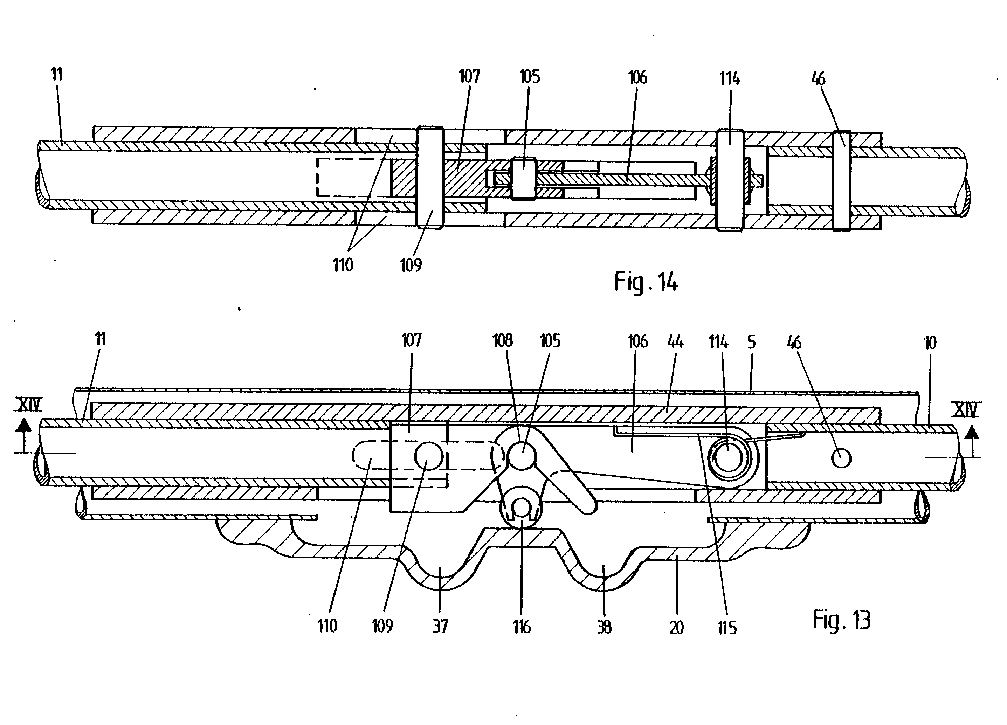

Bei der Ausführungsform der Erfindung nach Fig. 13 und 14 ist der Mitnahmestift 105 an der Klinke 106 befestigt und greift in eine Fangeinrichtung 107 ein, die zu diesem Zweck mit einer konisch sich nach unten erweiternden Aussparung 108 versehen ist. Die Fangeinrichtung 107 ist am Ende des Rohres 11 des Schaltgestänges mit einem Stift 109 befestigt, dessen Ende in Schlitze 110 des die Klinke 106 und die Fangeinrichtung 107 aufnehmenden Rohrstückes 44 eingreifen, um bei der Ganganwahl eine gemeinsame Drehbewegung der beiden Rohre 10 und 11 des Schaltgestänges zu ermöglichen. Die Klinke 106 ist mittels des im Rohrstück 44 angebrachten Stiftes 114 schwenkbar gelagert und wird durch eine Schenkelfeder 115 nach unten in die Vertiefungen 37 und 38 des Schutzrohrdeckels 20 gedrückt. Das Ende des Rohres 10 des Schaltgestänges ist mit dem Stift 46 am Rohrstück 44 befestigt. Sobald die auf dem Deckel aufruhende Rolle 116 der Klinke 106 in eine der Vertiefungen 37 oder 38 gelangt, sind beide Rohre 10 und 11 entkoppelt, und das Rohr 11 kann eine Hin- und Herbewegung ausführen, die nicht auf das Rohr 10 übertragen wird.

Das der Erfindung zugrunde liegende Prinzip kann auch bei anderen Anordnungen mit Vorteil verwendet werden, wo die Aufgabe vorliegt, mit einfachen Mitteln eine lösbare Kopplung zwischen zwei Stangen zu erreichen, um eine Hin- und Herbewegung der einen Stange aufzufangen, damit diese Bewegung nicht auf die andere Stange übertragen wird, wie dies bei einer starren Verbindung der Fall wäre. Die Erfindung wurde oben anhand der Zeichnung an mehreren Ausführungsbeispielen erläutert, die den Einbau der erfindungsgemäßen Entkopplungseinrichtung in das Schaltgestänge für das Getriebe eines Kraftfahrzeuges zum Gegenstand haben. Sie ist jedoch weder auf diese Anwendungsart noch auf die in der Zeichnung dargestellten Konstruktionen beschränkt, denn es gibt mannigfaltige Abwandlungsmöglichkeiten in der Ausbildung der Einzelteile der Entkopplungseinrichtung und in deren Anordnung, ohne daß dabei der durch die Erfindung abgesteckte Rahmen verlassen wird.

**Patentansprüche**

1. Verbindungselement für das zwischen Getriebe (2) und Schalthebel (1) eines Kraftfahrzeuges angeordnete Schaltgestänge (3, 4), das als Entkopplungseinrichtung ausgebildet und zwischen zwei Schaltstangen (10, 11) angeordnet ist und nach dem Einschalten eines Ganges eine Hin- und Herbewegung der entkoppelten Schaltstange (11) zuläßt, dadurch gekennzeichnet, daß die Wirkverbindung der in Eingriff miteinander stehenden Enden der Schaltstangen (10, 11) in Abhängigkeit von den Schaltbewegungen des Schalthebels (1) über eine unter Federwirkung stehende und an der Schaltstange (10) schwenkbar gelagerte Klinke (8, 43, 87, 106) erfolgt, die mit karosseriefesten Teilen (5, 20, 37, 38, 56, 57, 58, 94) zusammenwirkende Steuermittel (19, 55, 93, 116) aufweist und mit Teilen (15, 45, 77, 107) der anderen Schaltstange (11) in und außer Eingriff gelangt.

2. Verbindungselement nach Anspruch 1, dadurch gekennzeichnet, daß die Klinke (8, 43) am Ende der mit dem Schalthebel (1) verbundenen Schaltstange (10) schwenkbar gelagert ist, mit einem am Ende der anderen Schaltstange (11) gelagerten Mitnahmestift (15, 45) oder dergl. zusammenwirkt und einen Nocken (19, 55) besitzt, der in Vertiefungen (37, 38 ; 56, 57) des die Schaltstangen (10, 11) umgebenden Schutzrohres (5) oder eines anderen karosseriefesten Teils einrasten kann bzw. von dem karosseriefesten Teil gesteuert wird.

3. Verbindungselement nach Anspruch 1 oder 2, dadurch gekennzeichnet, daß die Schaltstangen als Rohre (10, 11) ausgebildet und mit ihren Enden verschiebbar ineinander gesteckt sind und ein Stift (14) zur Lagerung der Klinke (8) an dem einen Rohr (10) befestigt ist und mit seinen Enden in gegenüberliegende Längsschlitze (29) des anderen Rohres (11) eingreift, damit bei der Gangwahl beide Rohre (10, 11) gemeinsam eine Drehbewegung ausführen können.

4. Verbindungselement nach Anspruch 1 bis 3, dadurch gekennzeichnet, daß der Mitnahmestift (15, 45) in einem quer zur Längsachse des Rohres (11) verlaufenden Schlitz (24, 65) verschiebbar gelagert ist und durch eine Feder (17, 66) in seiner Ausgangsstellung gehalten wird.

5. Verbindungselement nach Anspruch 1 bis 4, dadurch gekennzeichnet, daß die Klinke (8) eine Lauffläche (33) mit zwei Anschlägen (34, 35) und eine Aussparung (30) für den Mitnahmestift (15) aufweist.

6. Verbindungselement nach Anspruch 1 bis 5, dadurch gekennzeichnet, daß die Vertiefungen (37, 38) für den Nocken (19) der Klinke (8) in einem verschieb- und feststellbaren Deckel (20) eingeformt sind, der auf eine Öffnung des Schutzrohres (5) aufgesetzt ist.

7. Verbindungselement nach einem der Ansprüche 1 bis 6, dadurch gekennzeichnet, daß die Klinke (43) in einem die beiden Enden der Rohre (10, 11) des Schaltgestänges verbindenden Rohrstück (44) drehbar gelagert ist und durch eine Öffnung (53) des Rohres (11) und eine Öffnung (54) des Rohrstückes.(44) in das Schutzrohr (5) hineinragt.

8. Verbindungselement nach Anspruch 7, dadurch gekennzeichnet, daß die Schrauben (61, 62) zum Befestigen des Deckels (58) am Schutzrohr (5) in Langlöcher (59, 60) des Schutzrohrdeckels (58) eingreifen, um eine Einjustierung der Rastlöcher (56, 57) für die Rolle (55) der Klinke (43) zu ermöglichen.

9. Verbindungselement nach einem der Ansprüche 1 bis 8, dadurch gekennzeichnet, daß am Ende jedes Rohres (10, 11) des Schaltgestänges je eine unter Federwirkung stehende Klinke (43, 77) angeordnet ist, beide Klinken (43, 77) sich in dem die Enden der Rohre (10, 11) aufnehmenden Rohrstück (44) befinden und miteinander zusammenwirken.

10. Verbindungselement nach Anspruch 9, dadurch gekennzeichnet, daß die erste Klinke (43) eine Verzahnung (82) aufweist, in die ein Zahn (83) oder eine Verzahnung der zweiten Klinke (77) einrasten kann.

11. Verbindungselement nach einem der Ansprüche 1 bis 10, dadurch gekennzeichnet, daß die unter Federwirkung stehende Klinke (87) im Rohrstück (44) und im Rohr (11) des Schaltgestänges schwenkbar gelagert ist, durch Öffnungen (90, 91) im Rohr (11) und im Rohrstück (44) in das Schutzrohr (5) hineinragt und im Bereich der Schwenkachse (86) Nocken (97, 98) zum Festklemmen im Rohr (11) des Schaltgestänges besitzt, um eine kraftschlüssige Verbindung zwischen den beiden Rohren (10, 11) des Schaltgestänges herzustellen.

12. Verbindungselement nach Anspruch 11, dadurch gekennzeichnet, daß der Stift (86) zur Lagerung der Klinke (87) am Rohrstück (44) befestigt und durch Längsschlitze (88) im Ende des Rohres (11) des Schaltgestänges hindurchgeführt ist.

13. Verbindungselement nach Anspruch 11 oder 12, dadurch gekennzeichnet, daß in die Öffnung (91) für die Klinke (87) im Rohrstück (44) ein Anschlag (92) für den durch die Öffnung (91) hindurchragenden Teil der Klinke (87) eingesetzt bzw. darin ausgebildet ist.

14. Verbindungselement nach Anspruch 11 bis 13, dadurch gekennzeichnet, daß die Klinke (87) an ihrem im Schutzrohr (5) befindlichen Ende eine federnd gelagerte Rolle (93) aufweist, die in Vertiefungen (94) oder Löcher des Schutzrohrdeckels (58) einrasten kann.

15. Verbindungselement nach einem der Ansprüche 1 bis 14, dadurch gekennzeichnet, daß die in der Klinke (8) für den Mitnahmestift (15) vorgesehene Aussparung (30) konisch nach unten erweitert ist (Fig. 12).

16. Verbindungselement nach einem der Ansprüche 1 bis 15, dadurch gekennzeichnet, daß der Mitnahmestift (105) an der Klinke (106) befestigt ist und in eine konisch sich erweiternde Aussparung (108) einer am Ende des einen Rohres (11) des Schaltgestänges befindlichen Fangeinrichtung (107) eingreift.

**Claims**

1. Connector for the gearshift linkage (3, 4) disposed between gearbox (2) and gear lever (1) of a motor vehicle, which is constructed as an uncoupling device and disposed between two gear selector rods (10, 11) and permits reciprocation of the uncoupled gear selector rod (11) after engagement of a gear, characterised in that the mutually engaged ends of the gear selector rods (10, 11) are operatively connected to each other in dependence on the gearshift movements of the gear lever (1) by a spring-loaded latch (8, 43, 87, 106) which is pivotably mounted on one gear selector rod (10), comprises control means (19, 55, 93, 116) cooperating with components (5, 20, 37, 38, 56, 57, 58, 94) fixed to the bodywork and becomes engaged with and disengaged from components (15, 45, 77, 107) of the other gear selector rod (11).

2. Connector according to claim 1, characterised in that the latch (8, 43) is pivotably mounted on the end of the gear selector rod (10) connected to the gear lever (1), cooperates with a driving pin (15, 45) or the like mounted on the end of the other gear selector rod (11), and has a projection (19, 55) which can engage in recesses (37, 38 ; 56, 57) in the casing tube (5) surrounding the gear selector rods (10, 11) or in another component fixed to the bodywork, or is controlled by the component fixed to the bodywork.

3. Connector according to claim 1 or 2, characterised in that the gear selector rods are constructed as tubes (10, 11) and fit by their ends slidably one inside the other, and a pin (14) for mounting the latch (8) is attached to one tube (10), with its ends engaging in opposed slots (29) in the other tube (11), so that during gear selection the two tubes (10, 11) together can perform a rotational movement.

4. Connector according to claims 1 to 3, characterised in that the driving pin (15, 45) is mounted slidably in a slot (24, 65) extending perpendicularly to the longitudinal axis of the tube (11), and is held in its starting position by a spring (17, 66).

5. Connector according to claims 1 to 4, characterised in that the latch (8) comprises a bearing surface (33) with two stops (34, 35) and a notch (30) for the driving pin (15).

6. Connector according to claims 1 to 5, characterised in that the recesses (37, 38) for the projection (19) of the latch (8) are formed in a slidable and lockable cover (20) which is placed over an opening in the casing tube (5).

7. Connector according to any of claims 1 to 6, characterised in that the latch (43) is mounted rotatably in a tube section (44) connecting the two ends of the tubes (10, 11) of the gearshift linkage, and extends through an opening (53) in tube (11) and an opening (54) in the tube section (44) into the casing tube (5).

8. Connector according to claim 7, characterised in that the bolts (61, 62) for attaching the cover (58) to the casing tube (5) engage in slots (59, 60) in the casing tube cover (58), in order to allow adjustment of the latching holes (56, 57) for the roller (55) of the latch (43).

9. Connector according to any of claims 1 to 8, characterised in that at the end of each tube (10, 11) of the gearshift linkage is disposed a spring-loaded latch (43, 77), and the two latches (43, 77) are located in the tube section (44) which receives the ends of the tubes (10, 11) and cooperate with each other.

10. Connector according to claim 9, characterised in that the first latch (43) comprises a toothed portion (82) with which a tooth (83) or a toothed portion of the second latch (77) can mesh.

11. Connector according to any of claims 1 to 10, characterised in that the spring-loaded latch (87) is mounted pivotably in the tube section (44) and in tube (11) of the gearshift linkage, extends through openings (90, 91) in tube (11) and in the tube section (44) into the casing tube (5), and in the region of the pivot shaft (86) has projections (97, 98) for wedging in tube (11) of the gearshift linkage in order to form a frictional connection between the two tubes (10, 11) of the gearshift linkage.

12. Connector according to claim 11, characterised in that the pin (86) for mounting the latch (87) is attached to the tube section (44) and passes through slots (88) in the end of tube (11) of the gearshift linkage.

13. Connector according to claim 11 or 12, characterised in that inserted in the opening (91) for the latch (87) in the tube section (44), or formed therein, is a stop (92) for the portion of the latch (87) which extends through the opening (91).

14. Connector according to claims 11 to 13, characterised in that the latch (87) comprises, at its end located in the casing tube (5), a spring-mounted roller (93) which can engage in recesses (94) or holes in the casing tube cover (58).

15. Connector according to any of claims 1 to 14, characterised in that the notch (30) provided in the latch (8) for the driving pin (15) diverges conically downwards (Fig. 12).

16. Connector according to any of claims 1 to 15, characterised in that the driving pin (105) is attached to the latch (106) and engages in a conically diverging notch (108) in a gripping device (107) located at the end of one tube (11) of the gearshift linkage.

**Revendications**

1. Elément de raccordement pour la timonerie de changement de vitesse (3, 4) interposée entre la boîte de vitesse (2) et le levier de changement de vitesse (1) d'un véhicule automobile, lequel élément, réalisé sous la forme d'un dispositif d'embrayage et installé entre deux tringles de manœuvre (10, 11), autorise un mouvement de va-et-vient de la tige (11) désaccouplée après le passage d'une vitesse, caractérisé par le fait que le raccordement dynamique des extrémités, mutuellement en prise, des tringles de manœuvre (10, 11) s'effectue en fonction des déplacements du levier de changement de vitesse (1) par l'intermédiaire d'un levier à cliquet (8, 43, 87, 106) qui, soumis à l'action d'un ressort et monté pivotable sur la tringle de manœuvre (10), comporte des moyens de commande (19, 55, 93, 116) coopérant avec des éléments (5, 20, 37, 38, 56, 57, 58, 94) solidiaires de la carrosserie et se met en prise et hors de prise avec des éléments (15, 45, 77, 107) de l'autre tringle de manœuvre (11).

2. Elément de raccordement selon la revendication 1, caractérisé par le fait que le levier à cliquet (8, 43) est monté pivotable à l'extrémité de la tringle de manœuvre (10) reliée au levier de changement de vitesse (1), coopère avec une broche d'entraînement (15, 45) ou analogue montée à l'extrémité de l'autre tringle de manœuvre (11) et comporte un bec (19, 55) qui peut s'encliqueter dans des creux (37, 38 ; 56, 57) du tube de protection (5) entourant les tringles de manœuvre (10, 11) ou d'un autre élément solidaire de la carrosserie et est commandé par l'élément solidaire de la carrosserie.

3. Elément de raccordement selon la revendication 1 ou 2, caractérisé par le fait que les tringles de manœuvre sont réalisées sous la forme de tubes (10, 11) qui sont emboîtés l'un dans l'autre de façon déplaçable par leurs extrémités et une goupille (14), pour le montage du levier à cliquet (8), est fixée sur l'un des tubes (10) et s'engage par ses extrémités dans des fentes longitudinales opposées (29) de l'autre tube (11) afin que, lors de la sélection des vitesses, les deux tubes (10, 11) puissent exécuter en commun un mouvement de rotation.

4. Elément de raccordement selon les revendications 1 à 3, caractérisé par le fait que la broche d'entraînement (15, 45) est montée déplaçable dans une fente (24, 65) disposée transversalement à l'axe longitudinal du tube (11) et est maintenue dans sa position initiale par un ressort (17, 66).

5. Elément de raccordement selon les revendications 1 à 4, caractérisé par le fait que le levier à cliquet (8) comporte une portée (33) munie de deux butées (34, 35) et un évidement (30) pour la broche d'entraînement (15).

6. Elément de raccordement selon les revendications 1 à 5, caractérisé par le fait que les creux (37, 38) pour le bec (19) du levier à cliquet (8) sont façonnés d'une seule pièce dans un couvercle (20) déplaçable et verrouillable qui est posé sur une ouverture du tube de protection (5).

7. Elément de raccordement selon l'une des revendications 1 à 6, caractérisé par le fait que le levier à cliquet (43) est monté mobile en rotation dans un tronçon tubulaire (44) reliant les deux extrémités des tubes (10, 11) de la timonerie de changement de vitesse et fait saillie dans le tube de protection (5) par une ouverture (53) du tube (11) et une ouverture (54) du tronçon tubulaire (44).

8. Elément de raccordement selon la revendication 7, caractérisé par le fait que les vis (61, 62) pour la fixation du couvercle (58) sur le tube de protection (5) s'engagent dans des trous oblongs (59, 60) du couvercle (58) du tube de protection pour permettre un ajustage des trous d'encliquetage (56, 57) pour le galet (55) du levier à cliquet (43).

9. Elément de raccordement selon l'une des revendications 1 à 8, caractérisé par le fait qu'à l'extrémité de chaque tube (10, 11) de la timonerie de changement de vitesse est respectivement installé un levier à cliquet (43, 77) soumis à l'action d'un ressort, les deux leviers à cliquet (43, 77) se trouvant dans le tronçon tubulaire (44) recevant les extrémités des tubes (10, 11) et coopérant l'un avec l'autre.

10. Elément de raccordement selon la revendication 9, caractérisé par le fait que le premier levier à cliquet (43) comporte une denture (82) dans laquelle engrène une dent (83) ou une denture du second levier à cliquet (77).

11. Elément de raccordement selon l'une des revendications 1 à 10, caractérisé par le fait que le levier à cliquet (87) soumis à l'action d'un ressort est monté pivotable dans le tronçon tubulaire (44) et dans le tube (11) de la timonerie de changement de vitesse, fait saillie dans le tube de protection (5) par des ouvertures (90, 91) pratiquées dans le tube (11) et dans le tronçon tubulaire (44) et, dans la zone de l'axe de pivotement (86), comporte des bossages (97, 98) pour la fixation dans le tube (11) de la timonerie de changement de vitesse, afin de réaliser un raccordement par friction entre les deux tubes (10, 11) de la timonerie de changement de vitesse.

12. Elément de raccordement selon la revendication 11, caractérisé par le fait que la goupille (86) pour le montage du levier à cliquet (87) est fixée sur le tronçon tubulaire (44) et passe à travers des fentes longitudinales (88) à l'extrémité du tube (11) de la timonerie de changement de vitesse.

13. Elément de raccordement selon la revendication 11 ou 12, caractérisé par le fait qu'une butée (92) pour la partie, passant à travers l'ouverture (91), du levier à cliquet (87), est insérée dans l'ouverture (91) pour le levier à cliquet (87) dans le tronçon tubulaire (44) ou est réalisée à l'intérieur de celle-ci.

14. Elément de raccordement selon les revendications 11 à 13, caractérisé par le fait que le levier à cliquet (87), sur son extrémité se trouvant dans le tube de protection (5), comporte un galet (93) qui est monté sur ressort et qui peut s'encliqueter dans des creux (94) ou des trous du couvercle (58) du tube de protection.

15. Elément de raccordement selon l'une des revendications 1 à 14, caractérisé par le fait que l'évidement (30) prévu dans le levier à cliquet (8) pour la broche d'entraînement (15) est élargi coniquement vers le bas (figure 12).

16. Elément de raccordement selon l'une des revendications 1 à 15, caractérisé par le fait que la broche d'entraînement (105) est fixée sur le levier à cliquet (106) et s'engage dans un évidement (108) s'élargissant coniquement d'un dispositif d'arrêt (107) se trouvant à l'extrémité de l'un des tubes (11) de la timonerie de changement de vitesse.

Fig. 1

Fig. 2

Fig. 3

Fig. 4

0 088 329

Fig. 5

Fig. 6

Fig. 7

0 088 329

Fig. 8

Fig. 9

4

Fig. 10

Fig. 11

Fig. 12

Fig. 14

Fig. 13

0 088 329